# EUROPEAN PATENT APPLICATION

(11) **EP 3 989 099 A1**
(43) Date of publication of application: **27.04.2022**
(21) Application number: 21819313.4
(22) Date of filing: 21.06.2021
(51) Int. Cl.: G06F 30/392

(54) **CHIP DESIGN METHOD AND DESIGN APPARATUS, COMPUTER DEVICE, AND STORAGE MEDIUM**

(30) Priority: 31.08.2020 CN 202010901336
(71) Applicant: Changxin Memory Technologies, Inc., Hefei, Anhui 230601 (CN)
(72) Inventor: LIN, Feng, Hefei, Anhui 230601 (CN); WU, Zengquan, Hefei, Anhui 230601 (CN)
(74) Representative: V.O.
(86) International application number: PCT/CN2021/101364
(87) International publication number: WO 2022/041972

(57) **Abstract**

The present application discloses a design method, a design device, a computer device, and a storage medium for a chip. Where, the design method of the chip includes creating a power bus network according to position of the pad and the chip layout floor plan, determines the position of the power port of the circuit module in the power bus network, and creates a power supply network model according to the power bus network, according to the power supply network model and the power port of the circuit module generates a network table with a power supply network in the power supply port of the power bus network, and circuit simulation is performed according to a network table in which the power supply network is embedded. The design method, design device, computer device and storage medium provided herein, shorten the chip design development cycle, and reduce design costs.

## Description

### CROSS REFERENCE

This application claims to the priority of Chinese patent application No. 202010901336.0 filed on August 31, 2020 and entitled " chip design method, design device, computer device and storage medium", the content of which is hereby incorporated by reference in its entirety.

### TECHNICAL FIELD

The embodiments of the present application relate to the technical field of chip design, and in particular, to a chip design method, design device, computer device and storage medium.

### BACKGROUND

With the development of integrated circuit technologies, the signal integrity and power integrity analysis of the chip has become more and more important. With the continuous reduction of chip process size, the parasitic influence of the chip power supply network is getting larger and larger. A bad design could cause dissatisfaction of the timing of key circuit modules with the requirements, serious transient noise, etc., which affect the actual working performance of the chip, and cause logical errors and even chip failure in severe cases.

In the chip design, it is necessary to perform processes of (layout design) pre-simulation and (layout design) post-simulation. The simulation analysis of power integrity is usually performed after the design of the entire layout of the chip is completed. If the simulation shows that the timing margin does not meet the requirements, it is necessary to repeat design and verification of the power supply network or circuit for times, which will seriously increase the design development cycle and cost.

It should be noted that the information in the background of the application is only used to enhance the understanding of the background of the present disclosure, and therefore may include information that does not constitute the prior art known to those of ordinary skill in the art.

### SUMMARY

This application provides a chip design method, design device, computer device and storage medium, so as to shorten the chip design and development cycle and reduce the design cost.

In a first aspect, an embodiment of this present application provides a chip design method, which includes: a power bus network is created according to a bonding pad position and a chip layout floor plan; a position of a power port of a circuit module in the power bus network is determined; a power supply network model is created according to the power bus network; a netlist embedded with a power supply network is generated according to the power supply network model and the position of the power port of the circuit module in the power bus network; circuit simulation is performed according to the netlist embedded with the power supply network.

In a second aspect, an embodiment of this present application also provides a chip design device, which includes: a power bus network generation module, which is used to create a power bus network according to a bonding pad position and a chip layout floor plan; a circuit module position determination module, which is used to determine a position of a power port of the circuit module in the power bus network; a power supply network model generation module, which is used to create a power supply network model according to the power bus network; a power supply network-embedded netlist generation module, which is used to generate a netlist embedded with power supply network model according to the power supply network model and the position of the power port of the circuit module in the power bus network; a simulation module, which is used to perform circuit simulation according to the netlist embedded with the power supply network.

In a third aspect, an embodiment of this present application also provides a computer device, including a memory, a processor, and a computer program stored on the memory and running on the processor. The processor executes the computer program to implement any chip design method described in the first aspect.

In a fourth aspect, an embodiment of this present application also provides a storage medium containing computer-executable instructions, which are executed by a computer processor to implement any chip design method described in the first aspect.

According to the chip design method, design device, computer device and storage medium provided by the embodiments of this present application, a power bus network is created according to a bonding pad position and a chip layout floor plan, a position of a power port of a circuit module in the power bus network, a power supply network model is created according to the power bus network, a netlist embedded with a power supply network is generated according to the power supply network model and the position of the power port of the circuit module in the power bus network, and circuit simulation is performed according to the netlist embedded with the power supply network, parasitic parameters in the power bus network are integrated into the circuit netlist for simulation to realize the power integrity analysis of the chip, so as to verify whether the power supply network design of the chip meets the requirements, the analysis can be completed either in the layout design or after the layout design is completed, which reduces the difficulty of power supply network design, thereby reducing the development cycle of chip design and reducing design costs.

### BRIEF DESCRIPTION OF THE DRAWINGS

FIG. 1 is a schematic flowchart of a chip design method provided by an embodiment of the application;
FIG. 2 is a schematic flowchart of another chip design method provided by an embodiment of the application;
FIG. 3 is a schematic structural diagram of a power bus network provided by an embodiment of the application;
FIG. 4 is a schematic structural diagram enlarged at A of FIG. 3;
FIG. 5 is a schematic diagram of an integrated structure of a circuit module and a power bus network provided by an embodiment of the application;
FIG. 6 is a schematic structural diagram of a power supply network model provided by an embodiment of the application;
FIG. 7 is a schematic structural diagram of a power supply network unit provided by an embodiment of the application;
FIG. 8 is a schematic diagram of an integrated structure of a circuit module and a power supply network model provided by an embodiment of the application;
FIG. 9 is a schematic flowchart of creating a power supply network model according to an embodiment of the application;
FIG. 10 is a schematic flowchart of another chip design method provided by an embodiment of the application;
FIG. 11 is a schematic structural diagram of a storage system provided by an embodiment of this application;
FIG. 12 is a schematic structural diagram of a chip design device provided by an embodiment of the application;
FIG. 13 is a schematic structural diagram of a power supply network model generation module provided by an embodiment of the application;
FIG. 14 is a schematic structural diagram of a power supply network model generation module provided by an embodiment of the application;
FIG. 15 is a schematic structural diagram of a power supply network-embedded netlist generation module provided by an embodiment of the application;
FIG. 16 is a schematic structural diagram of a computer device provided by an embodiment of this application.

### DETAILED DESCRIPTION

The application will be further described in detail below with reference to the drawings and embodiments. It can be understood that the specific embodiments described here are only used to explain the application, but not to limit the application. In addition, it should be noted that, for ease of description, the drawings only show part of the structure related to the present application instead of the entire structure.

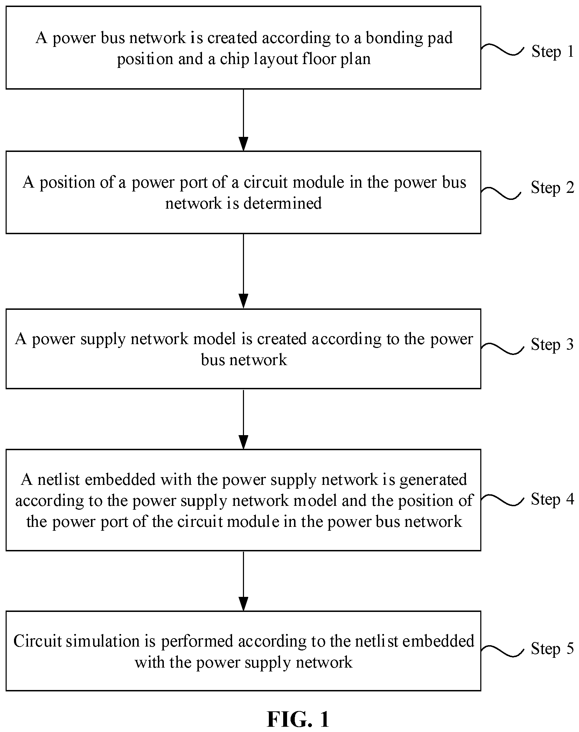

FIG. 1 is a schematic flowchart of a chip design method provided by an embodiment of the application. As shown in FIG. 1, the chip design method provided by the embodiment of the application includes the following steps.

In step 1, a power bus network is created according to a bonding pad position and a chip layout floor plan.

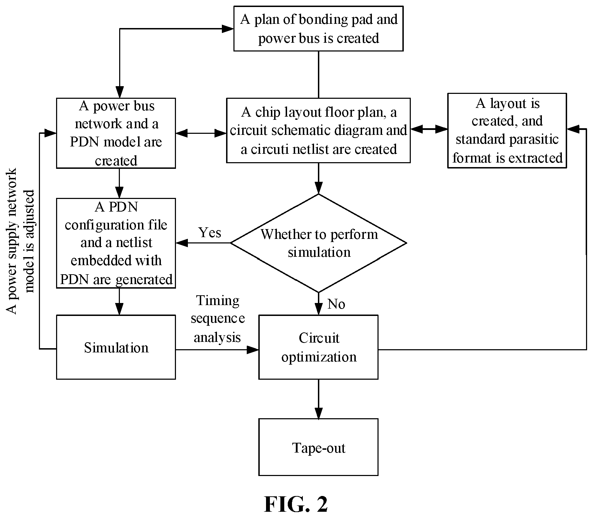

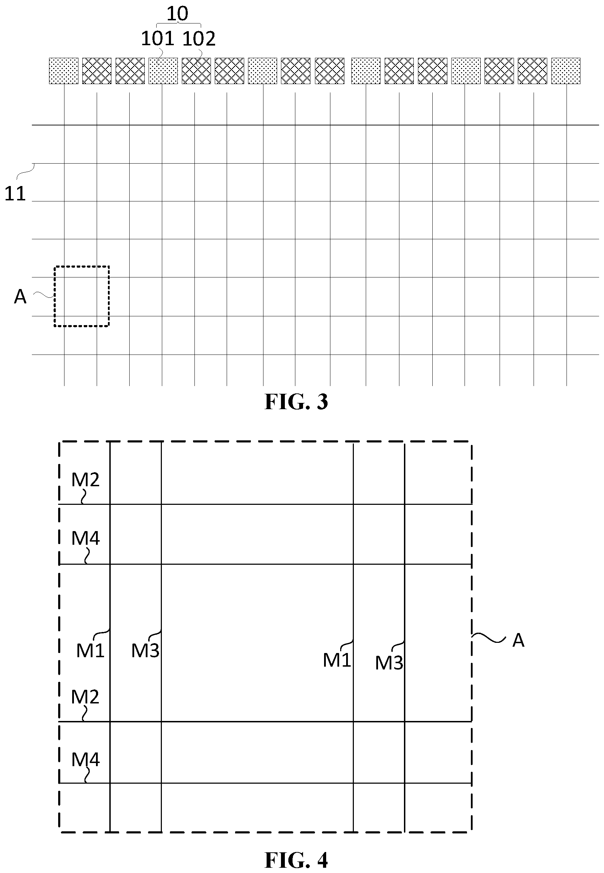

Exemplarily, FIG. 2 is a schematic flowchart of another chip design method provided by an embodiment of the application, and FIG. 3 is a schematic structural diagram of a power bus network provided by an embodiment of the application. As shown in FIG. 2 and FIG. 3, a layout plan is carried out for a chip: the determination of chip length and width is completed, the arrangement of bonding pads is completed, the power plan is completed, a plan of bonding pad and power bus (createpadslog&powerbusplan) is created. The arrangement of the bonding pads also considers multiple factors such as the convenience of routing the chip to be applied to the package substrate in the future and the ease of implementation inside the chip. According to the functions required by the chip, circuit modules are designed, a circuit schematic diagram and a circuit netlist are created; the layout of circuit modules and power buses in the chip is completed, and a chip layout floor plan is created. A power bus network is created according to a bonding pad position and the chip layout floor plan. As shown in FIG. 3, the power bus network includes a ponding pad 10 and a power bus 11. The bonding pad 10 includes a power supply pad 101 and a signal pad 102. The power supply pad 101 is used to provide corresponding power for each node of the power bus 11. The signal pad 102 is used to provide a signal. The power bus 11 is connected to the power supply pad 101. The power bus 11 may be composed of multiple metal layers. FIG. 4 is a schematic structural diagram enlarged at A of FIG. 3. As shown in FIG. 4, taking four metal layers as an example, the power bus 11 (referring to FIG. 3) is composed of four metal layers M1, M2, M3 and M4, thus power at different voltage can be transmitted through different metal layers. It should be noted that, in other embodiments, the power bus may also be composed of other numbers of metal layers, which can be selected as needed.

In step 2, a position of a power port of a circuit module in the power bus network is determined.

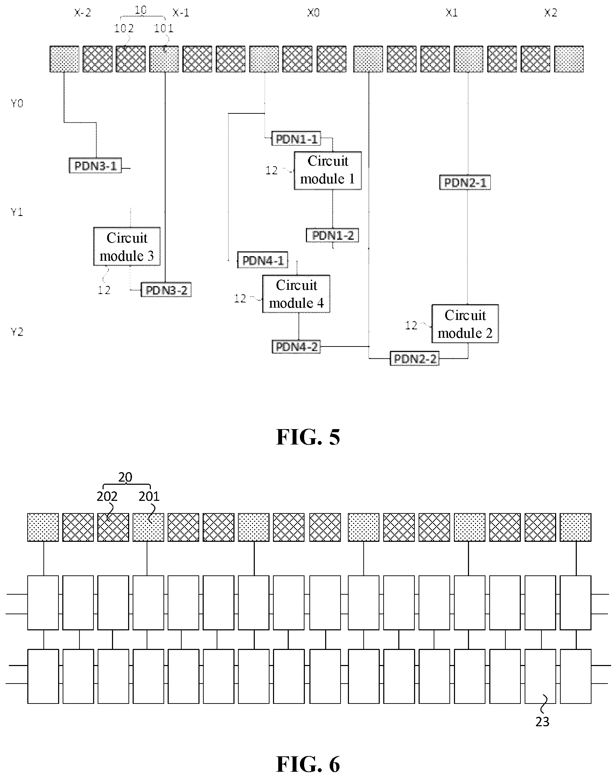

Exemplarily, FIG. 5 is a schematic diagram of an integrated structure of a circuit module and a power bus network provided by an embodiment of the application. As shown in FIG. 5, the position of the circuit module 12 in the power bus network is determined according to the chip layout floor plan, and each power port of each circuit module 12 is found, and the position of the power port in the power bus network is determined, so as to get ready for the subsequent determination of the connection path between each power port of each circuit module 12 and the power supply pad 101. Specifically, as shown in FIG. 5, taking the circuit module 12 including a power supply module 1, a power supply module 2, a power supply module 3 and a power supply module 4 as an example, each circuit module 12 includes two power ports, which are respectively connected to a power supply pad 101 providing high-voltage and a power supply pad 101 providing low-voltage, according to the chip layout floor plan to determine the position of the power supply module 1, the power supply module 2, the power supply module 3 and the power supply module 4 in the power bus network, each power port of the module 12 is found, the position of the power port in the power bus network is determined, and then the connection path between each power port of each circuit module 12 and the powers supply pad 101 is determined.

In step 3, a power supply network model is created based on the power bus network.

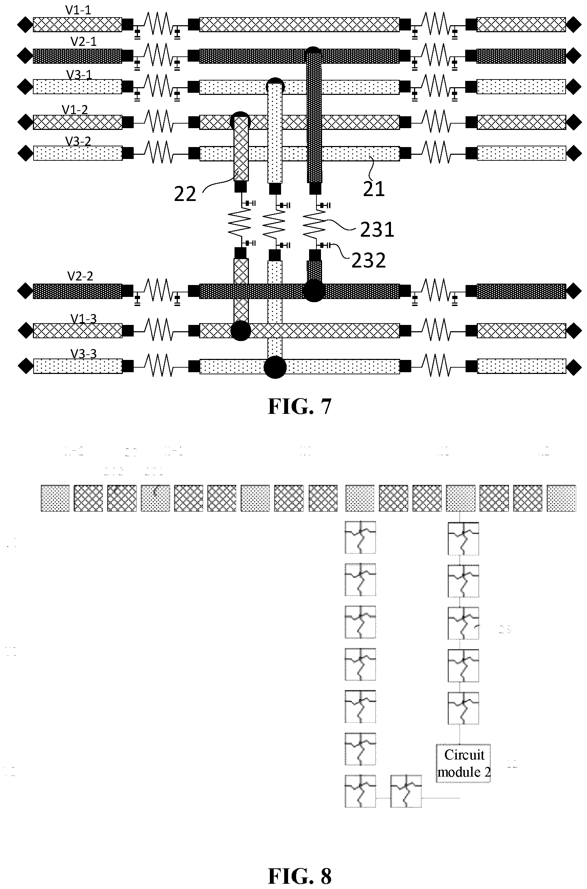

Exemplarily, FIG. 6 is a schematic structural diagram of a power supply network model provided by an embodiment of the application, and FIG. 7 is a schematic structural diagram of a power supply network unit provided by an embodiment of the application. As shown in FIG. 6 and FIG.7, the power supply network model includes multiple bonding pads 20 and an array composed of multiple power supply network units 23. The bonding pad includes a power supply pad 201 and a signal pad 202. The power supply network units 23 are connected to each other through power lines 21 and/or the power bridge wire 22. Each power supply network unit 23 includes multiple power lines 21 and multiple power bridge lines 22. The power line 21 and the power bridge line 22 each includes at least one of a resistor 231 or a capacitor 232. The value of the parasitic resistance and/or the value of the parasitic capacitance on the power line 21 and the power bridge line 22 may be calculated, and the value of the parasitic resistance and/or the value of the parasitic capacitance may be added to the resistance 231 and/or the capacitance 232 of the power supply network unit 23, making the power supply network model have parasitic parameters on the power bus network. The method of manually establishing a power supply network model in this embodiment is simple and effective, and the optimization and modification of the power supply network can be tracked easily.

In step 4, a netlist embedded with the power supply network is generated according to the power supply network model and the position of the power port of the circuit module in the power bus network.

Exemplary, FIG. 8 is a schematic diagram of an integrated structure of a circuit module and a power supply network model according to an embodiment of the present application. Referring to FIG. 5 and FIG. 8, when the power bus network is compared with the power supply network model, the position of the power port of the circuit module 12 in the power supply network model is determined according to the position of the power port of the circuit module 12 in the power bus network, the connection path between the power port and the bonding pad of the circuit module 12 in the power supply network model is determined according to connection between the power port of the circuit module 12 and the power supply pad in the power bus network, the power supply network unit 23 on the connection path is integrated with the circuit netlist to generate a netlist embedded with the power supply network, so that the netlist embedded with the power supply network contains parasitic parameters on the power bus network. FIG. 8 shows only the integrated structure of the circuit module 2 and the power supply network model. In FIG. 5, PDN2-1 represents a collection of power supply network units on the connection path between the power port of the circuit module 2 and the power supply pad 101; similarly, PDN2-2, PDN1-1, PDN1-2, PDN3-1, PDN3-2, PDN4-1 and PDN4-2 each represents a collection of power supply network units on a corresponding path between each power port of each circuit module 12 and the power supply pad 101.

In step 5, circuit simulation is performed according to the netlist embedded with the power supply network.

Circuit simulation is performed on the netlist embedded with the power supply network with parasitic parameters on the power bus network to verify in advance whether the power supply network design of the chip meets the requirements and reduce the difficulty of subsequent design, thereby reducing the development cycle of chip design and reducing design costs. It should be noted that the design method of this embodiment can either perform circuit simulation before the layout design is completed, or perform circuit simulation after the layout design is completed, or perform simulation after part of the layout design is completed, and the simulation may be performed for multiple times in the entire design process, and maybe chosen by those skilled in the art.

According to the chip design method provided by the embodiments of the present application, a power bus network is created according to a bonding pad position and a chip layout floor plan, a position of a power port of a circuit module in the power bus network, a power supply network model is created according to the power bus network, a netlist embedded with a power supply network is generated according to the power supply network model and the position of the power port of the circuit module in the power bus network, and circuit simulation is performed according to the netlist embedded with the power supply network, parasitic parameters in the power bus network are integrated into the circuit netlist for simulation to realize the power integrity analysis of the chip, so as to verify whether the power supply network design of the chip meets the requirements, which reduces the difficulty of power supply network design, thereby reducing the development cycle of chip design and reducing design costs.

Optionally, the circuit module is a critical timing sequence circuit module.

The critical timing sequence circuit module is a circuit module that is more sensitive to power, and the parasitic parameter of the power bus 11 (referring to FIG. 3) on the connection path between the power port of the critical timing sequence circuit module and the power supply pad 101 (referring to FIG. 5) are added to the circuit netlist for simulation, ignoring circuit modules that are not sensitive to power, ensuring that the voltage and current of the power ports of the critical timing sequence circuit modules meet the requirements, while helping to reduce the amount of calculation and increase the speed of simulation.

Optionally, the critical timing sequence circuit module includes a circuit module on any one or more of a read timing sequence path, a write timing sequence path, an array timing sequence path and a command timing sequence path of the chip, and the chip includes a dynamic random access memory (DRAM).

In general, the circuit modules on the read timing sequence path, write timing sequence path, array timing sequence path and command timing sequence path of the chip are more important and sensitive to power, therefore, the circuit modules on the read timing sequence path, the write timing sequence path, the array timing sequence path and the command timing sequence are set as critical timing sequence circuit modules, and the parasitic parameters of the power bus 11 on the connection path between the power port of the critical timing sequence circuit module and the power supply pad 101 are added to the circuit netlist for simulation to realize the power integrity analysis of the critical timing sequence circuit module, and ensure the voltage and current of the port meet the requirements, which reduce the design difficulty, shorten the development cycle of chip design, and reduce design costs.

Optionally, the step of creating a power supply network model based on the power bus network includes: a layout of the power bus network is created according to the power bus network; a parasitic parameter is extracted from the layout of the power bus network; a value of the parasitic parameter is calculated; and the power supply network model is created according to the value of the parasitic parameter.

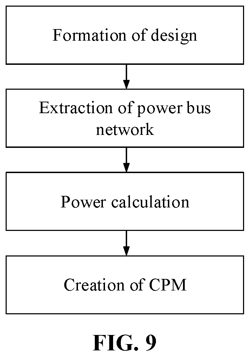

FIG. 9 is a schematic flowchart of creating a power supply network model by using computing software according to an embodiment of the application. As shown in FIG. 9, exemplarily, the step of creating a power supply network model based on a power bus network specifically includes the following operations.

Formation of design (Setup design): the layout of the power bus network is designed according to the width, spacing and level of the power bus in the power bus network, the layout of the power bus network is plane geometric description of the physical condition of the power bus network.

Power bus network extraction (Power Grid extraction): a parasitic parameter extraction function of the software is used to extract the parasitic resistance and/or parasitic capacitance in the power distribution network from the layout of the power bus network.

Power calculation: the value of parasitic resistance and/or parasitic capacitance, or the value of other parasitic parameters is calculated.

Creation of CPM (CPM creation): a CPM (chip power model) is automatically created according to the value of the above parasitic parameter to form a power supply network model.

A power supply network model is created by using software to extract the parasitic parameter in the power distribution network from the layout of the power bus network, which helps to improve the accuracy of the power supply network model.

Optionally, before the parasitic parameter is extracted from the layout of the power bus network, a step of creating the layout of the circuit module is further included.

Specifically, with continued reference to FIG. 2, in the chip design, the chip layout floor plan is created, pre-simulation (before the layout is created) is performed before the chip layout floor plan, the circuit schematic diagram and the circuit netlist are created, and the circuit is optimized according to a pre-simulation result, after the pre-simulation passes, the final layout design of each circuit module is completed, the layout of the circuit is created, extraction is performed on the layout in the standard parasitic format to obtain the parasitic parameters of each circuit module and signal routing on the layout, and the parasitic parameter of the layout is added to the circuit for post-simulation (after the layout is created), the circuit is optimized according to the post-simulation structure, and the layout design is adjusted until the post-simulation verification passes. The layout of the circuit module may be created before the extraction of the parasitic parameter extraction from the layout of the power bus network, so that the software can be used to extract the parasitic parameter of the layout of the power bus network and the extraction in standard parasitic format of the circuit module layout at the same time, which further helps to shorten the chip design and development cycle.

Optionally, the step of creating a power supply network model according to the power bus network includes a power supply network unit.

The power supply network unit includes multiple power lines and multiple power bridge lines, and the power lines and power bridge lines each include at least one of resistance or capacitance.

According to the power bus network, an array formed by multiple power supply network units is created to form a power supply network model.

Exemplarily, with continued reference to FIG. 6 and FIG. 7, the power supply network model may also be manually established, and the specific process is as follows. A power supply network unit 23 is created as needed, the power supply network unit 23 includes multiple power lines 21 and multiple power bridge lines 22. The power lines 21 and the power bridge lines 22 each includes at least one of resistance 231 and capacitance 232. The position and number of the resistance 231 and the capacitance 232 may be set according to actual needs, and are not limited in the embodiments of the application. According to the power bus network, an array formed by multiple power supply network units 23 is created, and the multiple power supply network units 23 are electrically connected through power lines 21 and/or power bridge lines 22 to finally form a power supply network model.

The power lines 21 and the power bridge lines 22 each may be composed of a single metal layer or multiple metal layers. Exemplarily, referring to FIG. 7, the power lines 21 and the power bridge lines 22 may be of multiple power supply types, such as power supply V1-1, V2-1, V3-1, V1-2, V3-2, V2-2, V1-3 and V3-3. The multiple power lines 21 include power lines 21 of the same power source type but used for different purposes. The power bridge lines 22 are electrically connected to at least part of power lines 201 of the same power source type but used for different purposes. The power supply pad 201 is electrically connected to a power line 21 of the corresponding power type, and is used to power the power line 21 of the corresponding type. Those skilled in the art can set the number of metal layers, the number of power lines 21 and power bridge lines 22 in the power supply network unit 23, and the connection relationship according to actual needs.

Optionally, the values of the resistance 231 and the capacitance 232 are programmable.

The values of the resistance 231 and the capacitance 232 are set to be programmable, which facilitates modification of the values of the resistance 231 and the capacitance 232 in the power supply network unit 23. When the circuit is optimized, the power supply, the value of the parasitic resistance and/or the value of the parasitic capacitance on the power line 21 and the power bridge line 22 may be calculated in real time according to the optimization result of the circuit, and the value of the parasitic resistance and/or the value of the parasitic capacitance are added to the resistance 231 and/or the capacitance 232 of the power supply network unit 23 through programming, which helps to further shorten the chip design and development cycle.

Optionally, the values of the resistance 231 and the capacitance 232 are calculated according to the size and material of the power line 21 or the power bridge line 22.

The values of the resistance 231 and the capacitance 232 may be calculated according to the size and material of the power line 21 or the power bridge line 22. When the subsequent circuit optimization is performed, only the size and material of the power line 21 or the power bridge line 22 need to be adjusted intuitively, the values of the resistance 231 and the capacitance 232 are updated through calculation.

In other embodiments, the values of resistance and capacitance may also be calculated according to spacing and level of power lines or power bridge lines to obtain more accurate parasitic parameters, which is not limited in the embodiment of the present application.

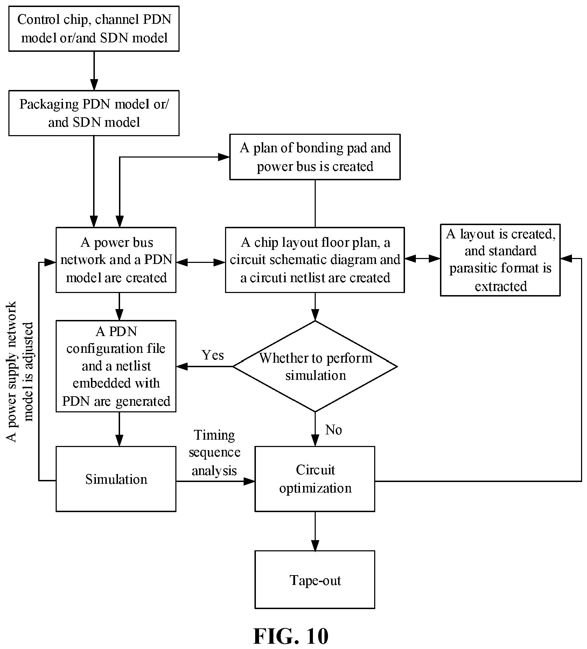

FIG. 10 is a schematic flowchart of another chip design method provided by an embodiment of the application. As shown in FIG. 10, optionally, before the power bus network is created according to the bonding pad position and the chip layout floor plan, the following operation is further included.

A packaging power delivery network (PDN) and/or signal distribution network (SDN) model of the chip. The creation of the power supply network model according to the power bus network includes creation of the power supply network model according to the power bus network, and the packaging power supply network model and/or the signal supply network model of the chip.

In other embodiments, the chip design method may also include: a control chip, a channel PDN model and/or a SDN model are created. The creation of a power supply network model according to the power bus network includes creation of the power supply network model according to the power bus network, the control chip, and the channel PDN model and/or the SDN model.

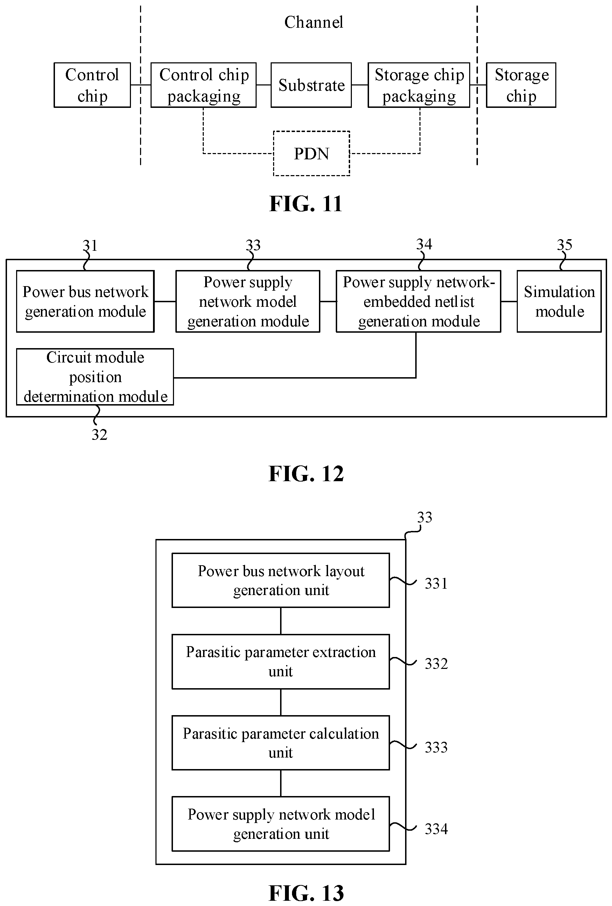

FIG. 11 is a schematic structural diagram of a storage system provided by an embodiment of the application. As shown in FIG. 11, exemplarily, the chip obtained by the chip design method provided by the embodiment of the application may be a storage chip, and the control chip is used to control the storage chip to perform operations such as reading and writing, and the control chip and the storage chip are respectively packaged and arranged on the substrate. With continued reference to FIG. 10, before the power bus network is created according to the bonding pad position and chip layout floor plan, the control chip, the channel PDN model and/or the SDN model, as well as the packaging power supply network model and/or signal supply network model of the memory chip, are created, which are then integrated into the creation of the power network supply model in this embodiment thereby further improving the accuracy between circuit simulation and actual performance, so that the simulation result better coincide with the actual situation, an accurate simulation result is obtained, and then the designed effect is obtained, the design cycle is further shortened, the design cost is reduced, and the design success rate is improved. It should be noted that FIG. 11 is only a storage system architecture to which the design method of this embodiment is applicable, and the packaging and integration form of the storage chip and the control chip is not limited to the form in FIG. 11. For other forms of packaging and integration, this embodiment is also applicable. The design method of the example is not limited in this embodiment, and those skilled in the art can set it according to needs.

Optionally, the step of determining the position of the power port of the circuit module in the power bus network includes the following operation.

The abscissa of the power port of the circuit module in the power bus network is determined.

The abscissa and ordinate are defined in the power bus network, and the abscissa and ordinate are used to indicate the position of the power port of the circuit module in the power bus network, with continued reference to FIG. 5, illustratively, the power bus network has the abscissas X-2, X-1, X0, X1 and X2, ordinates Y0, Y1 and Y2. Through the determination of the abscissa of the power port of the circuit module 12 in the power bus network, the position of the power port of the circuit module in the power bus network is determined, the method is relatively simple and easy to implement.

In other embodiments, the position of the power port of the circuit module in the power bus network may also be determined in the form of polar coordinates, which is not limited in the embodiment of the present application.

Optionally, the step of generating the netlist embedded with the power supply network according to the power supply network model and the position of the power port of the circuit module in the power bus network includes the following operations.

A power supply network configuration file is generated according to the power supply network model and the position of the power port of the circuit module in the power bus network. The power supply network configuration file is used to integrate the power supply network model and the circuit module.

The netlist embedded with the power supply network is generated according to the power supply network configuration file.

The power supply network configuration file is generated, and the power supply network model and circuit module are integrated by importing the power supply network configuration file to generate the netlist embedded with the power supply network, the operation is simple and the workload is reduced.

Optionally, the power supply network configuration file includes at least the abscissa and ordinate information of the power port of the circuit module in the power bus network.

By importing the power supply network configuration file, the abscissa and ordinate information of the power port of the circuit module in the power supply network configuration file in the power bus network, the position of the power port of the circuit module in the power supply network model is determined, and then the connection path between the power port and the bonding pad of the circuit module 12 is determined, the power supply network unit 23 on the connection path is integrated with the circuit netlist to generate the netlist embedded with the power supply network, so that the network embedded with the power supply network the table contains parasitic parameters on the power bus network.

Table 1 below is a schematic diagram of a power supply network configuration file provided by an embodiment of the application.

**Table 1**

| Power Grid Name | Net in PDN Model | Power for Instance Block | Power Pin of Instance Block | Decap on Power Grid | Layout location | Notes |
|---|---|---|---|---|---|---|
| VCC_2 | PDN_Model_Mid_vcc | Block_2 | vcc | 0 | X1,Y2 | |

Exemplarily, as shown in Table 1, the power supply network configuration file may include the name of the power bus (Power Grid Name), the name in the PDN model (Net in PDN Model), the instance block (Power for Instance Block), and the power pin of the instance block (Power Pin of Instance Block), decoupling capacitor (Decap on Power Grid), location (Layout location) and notes (Notes) and other information. Where, the instance module is the name of the circuit module in the chip, the power pin of the instance module is the name of the power port of the circuit module, and the power bus name is the name of the power bus through the power port of the circuit module is connected to the power supply pad unit 201 (refer to FIG. 6), the name in the PDN model is the name of the above power bus in the power supply network model, and the position is the abscissa and ordinate information of the power port of the circuit module in the power bus network, the decoupling capacitor refers to whether a decoupling capacitor needs to be set (for example, 0 means no decoupling capacitor, 1 means decoupling capacitor, but this embodiment does not limit this), this capacitance may provide a more stable power supply, and may also reduce the noise of the component coupled to the power supply terminal and may indirectly reduce the influence of other components from the noise of this component, and the remarks may provide other information required for integration. After the power supply network configuration file is imported, names of the power pin and power bus of the example module are found and matched with the circuit netlist, the power pin and power bus of the example module are added to the circuit netlist according to the position and the name in the PDN model between the power supply network unit, thereby generating the netlist embedded with the power supply network.

In other embodiments, those skilled in the art can set the power supply network configuration file according to actual needs, which is not limited in the embodiment of the present application.

Optionally, after the circuit simulation is performed according to the netlist embedded with the power supply network, the following operations are further included.

The power bus network is modified, or the circuit module is modified.

The modified netlist embedded with the power supply network is generated.

Circuit simulation is performed according to the modified netlist embedded with the power supply network.

Exemplarily, with reference continued to FIG. 2 and FIG. 10, after the circuit simulation is performed for the netlist embedded with the power supply network, the simulation result is analyzed in sequence, and the power bus network or the circuit module is modified according to the analysis result, thereby realizing circuit optimization; and then the modified netlist embedded with the power supply network is generated, and circuit simulation is performed according to the modified netlist embedded with the power supply network, until the simulation verification passes and the tape-out process is carried out.

With continued reference to FIG. 2 and FIG. 10, the chip design method provided by the present application may be applied to the pre-simulation stage and/or the post-simulation stage without changing the conventional chip design process, and the application is flexible.

According to the chip design method provided by the embodiments of the present application, a power bus network is created according to a bonding pad position and a chip layout floor plan, a position of a power port of a circuit module in the power bus network, a power supply network model is created according to the power bus network, a netlist embedded with a power supply network is generated according to the power supply network model and the position of the power port of the circuit module in the power bus network, and circuit simulation is performed according to the netlist embedded with the power supply network, parasitic parameters in the power bus network are integrated into the circuit netlist for simulation to realize the power integrity analysis of the chip, which reduces the difficulty of design, thereby reducing the development cycle of chip design and reducing design costs. Furthermore, the method may be applied to any simulation stage in the conventional chip design process, and the application is flexible.

Based on the same concept, an embodiment of the present application also provides a chip design device. FIG. 12 is a schematic structural diagram of a chip design device provided by an embodiment of the application. As shown in FIG. 12, the chip design device provided by the embodiment of the present application includes the following elements.

A power bus network generation module 31 is used to create a power bus network according to a bonding pad position and a chip layout floor plan.

A circuit module position determination module 32 is used to determine a position of a power port of a circuit module in the power bus network.

A power supply network model generation module 33 is used to create a power supply network model based on the power bus network.

A power supply network-embedded netlist generation module 34 is used to generate the netlist with the power supply network embedded according to the power supply network model and the position of the power port of the circuit module in the power bus network.

A simulation module 35 is used to perform circuit simulation according to the netlist embedded with the power supply network.

FIG. 13 is a schematic structural diagram of a power supply network model generation module provided by an embodiment of the application. As shown in FIG. 13, optionally, the power supply network model generation module 33 includes the following elements.

A power bus network layout generation unit 331 is used to create a layout of the power bus network according to the power bus network.

A parasitic parameter extraction unit 332 is used to extract a parasitic parameter of the layout of the power bus network.

A parasitic parameter calculation unit 333 is used to calculate a value of the parasitic parameter.

A power supply network model generation unit 334 is used to create the power supply network model according to the value of the parasitic parameter.

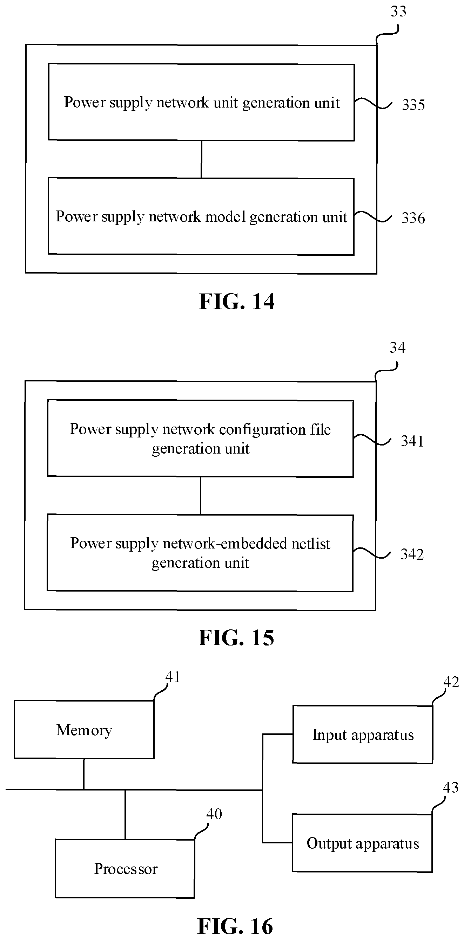

FIG. 14 is a schematic structural diagram of a power supply network model generation module provided by an embodiment of the application. As shown in FIG. 14, optionally, the power supply network model generation module 33 includes the following elements.

A power supply network unit generation unit 335 is used to generate a power supply network unit as needed, the power supply network unit including multiple power lines and multiple power bridge lines, and both power lines and power bridge lines including at least one of resistance and capacitance.

A power supply network model generation unit 336 is used to create an array formed by multiple power supply network units to form a power supply network model.

FIG. 15 is a schematic structural diagram of a netlist generation module embedded with a power supply network provided by an embodiment of the application. As shown in FIG. 15, optionally, the netlist embedded with the power supply network generation module 34 includes the following elements.

A power supply network configuration file generation unit 341 generates a power supply network configuration file according to the power supply network model and the position of the power port of the circuit module in the power bus network, the power supply network configuration file being used to integrate the power supply network model and the circuit module;

A power supply network-embedded netlist generation unit 342 generates the netlist embedded with the power supply network according to the power supply network configuration file.

The design device of the chip provided in the present application embodiment can perform the design method of the chip provided in accordance with any embodiment of the present application, and has functional modules and beneficial effect of execution method, and the explanation of the same or corresponding structure and terms as the above-mentioned embodiment, are not repeated here.

Based on the same concept, the present application also provides a computer device, including a memory, a processor, and a computer program stored on the memory and can run on the processor, characterized in that when the processor implements the computer program, the chip design method provided by any embodiment of the present application is implemented.

FIG. 16 is a schematic structural diagram of a computer device according to an embodiment of the present application. As shown in FIG. 16, the computer device includes a processor 40, a memory 41, an input device 42 and an output device 43; the number of processors 40 in the computer device may be one or more. In FIG. 16, the processor 40 is taken as an example. The processor 40, the memory 41, the input device 42, and the output device 43 in the computer device can be connected by a bus or other means. In FIG. 16 the connection by a bus is taken as an example.

The memory 41 may be used as a computer readable storage medium, which may be used to store software programs, computer executable programs, and modules, such as the program instructions/modules corresponding to the chip design method in the embodiment of the application (for example, referring to FIG. 12, the power bus network generation module 31, the circuit module position determination module 32, the power supply network model generation module 33, the power supply network-embedded netlist generation module 34, and the simulation module 35 in the chip design device). The processor 40 executes various functional applications and data processing of the computer device by running the software programs, instructions, and modules stored in the memory 41, that is, realizes the design method of the above-described chip design method.

The memory 41 can primarily include a storage program area and a storage data area, where the storage program area can store the operating system, the application required for at least one function; the storage data area can store data created according to the use of the terminal. Additionally, memory 41 can includes high speed random access memory, and may further include non-volatile memory, such as at least one disk storage device, flash device, or other non-volatile solid state memory device. In some examples, memory 41 may further includes a memory remotely set relative to processor 40, which can be connected to a computer device through a network. Examples of the above network include, but are not limited to the internet, corporate internal networks, local area networks, mobile communication networks and combinations thereof.

The input device 42 can be used to receive input digital or character information, and generate a key signal input related to user settings and functional control of the computer device. The output device 43 can include display devices such as a display screen.

Based on the same concept, the present application embodiment provides a storage medium including computer executable instructions, when the computer executable instructions are executed by the computer processor, they are used to execute the chip design method provided by any embodiment of the present application.

The chip design method includes the following operations.

In step 1, a power bus network is created according to a bonding pad position and a chip layout floor plan.

In step 2, a position of a power port of a circuit module in the power bus network is determined.

In step 3, a power supply network model is created according to the power bus network.

In step 4, a netlist embedded with the power supply network is generated according to the power supply network model and the position of the power port of the circuit module in power bus network.

In step 5, circuit simulation is performed according to the netlist embedded with the power supply network.

Of course, a storage medium including computer executable instructions provided herein, and its computer executable instructions are not limited to the method operations as described above, and related operations in the design method of the chip provided by any embodiment of the present application can also be performed.

Through the above description of the implementation manners, those skilled in the art can clearly understand that this application can be implemented by means of software and necessary general-purpose hardware, of course, it can also be implemented by hardware, but in many cases the former is better implementation. Base on this understanding, the technical solution of the this application essentially or the part that contributes to the prior art can be embodied in the form of software product, the computer software product can be stored in a computer readable storage medium, such as a software floppy disk, Read-only memory, random access memory, flash, hard drive or optical disk. etc., including several instructions to make a computer device (which can be a personal computer, a servers, or network devices, etc.) execute the methods described in each application.

It is worth noting that in an embodiment of the design device of the above chip, the respective units and modules included are divided according to functional logic, but is not limited to the above-described division, as long as the corresponding function can be achieved; in addition, the specific names of each functional unit are also intended to distinguish each other and are not intended to limit the scope of protection of the present application.

Note that the above is only the preferred embodiments of the present application and the principles of the techniques used. It will be understood by those skilled in the art that the present application is not limited to the particular embodiments described herein, and various significant changes, readjustments, and substitutions can be made without departing form the scope of protection of the present application. Therefore, although the present application is described in detail, the present application is not limited to the above embodiments, but also includes more other equivalent embodiments without departing form the concept of the present application, and the scope of the present application is determined by the scope of the appended claims.

## Claims

1. A chip design method, comprising:
creating a power bus network according to a bonding pad position and a chip layout floor plan;
determining a position of a power port of a circuit module in the power bus network;
creating a power supply network model according to the power bus network;
generating a netlist embedded with a power supply network according to the power supply network model and the position of the power port of the circuit module in the power bus network;
performing circuit simulation according to the netlist embedded with the power supply network.

2. The chip design method of claim 1, wherein the circuit module is a critical timing sequence circuit module.

3. The chip design method of claim 2, wherein the critical timing sequence circuit module comprises a circuit module on any one or more of a read timing sequence path, a write timing sequence path, an array timing sequence path and a command timing sequence path of the chip.

4. The chip design method of claim 1, wherein creating the power supply network model according to the power bus network comprises:
creating a layout of the power bus network according to the power bus network;
extracting a parasitic parameter of the layout of the power bus network;
calculating a value of the parasitic parameter;
creating the power supply network model according to the value of the parasitic parameter.

5. The chip design method of claim 4, wherein before extracting the parasitic parameter of the layout of the power bus network, the method further comprises: creating the layout of the circuit module.

6. The chip design method of claim 1, wherein creating the power supply network model according to the power bus network comprising:
creating a power supply network unit, wherein the power supply network unit comprises a plurality of power lines and a plurality of power bridge lines, the power lines and the power bridge lines each comprising at least one of resistance or capacitance;
creating, according to the power bus network, an array formed by a plurality of the power supply network units to form the power supply network model.

7. The chip design method of claim 6, wherein the value of the resistance and/or the capacitance is programmable.

8. The chip design method of claim 7, wherein the value of the resistance and/or the capacitance is calculated according to size and material of the power lines or the power bridge lines.

9. The chip design method of claim 1, further comprising:
creating a packaged power supply network model and/or signal supply network model of the chip;
wherein creating the power supply network model according to the power bus network comprising:
creating the power supply network model according to the power bus network, the packaged power supply network model, and/or the signal supply network model of the chip.

10. The chip design method of claim 9, further comprising:
creating a control chip, a channel PDN model and/or a SDN model;
wherein creating the power supply network model according to the power bus network comprises:
creating the power supply network model according to the power bus network as well as the control chip, the channel PDN model and/or the SDN model.

11. The chip design method of claim 1, wherein determining the position of the power port of the circuit module in the power bus network comprises:
determining horizontal and vertical coordinates of the power port of the circuit module in the power bus network.

12. The chip design method of claim 11, wherein generating the netlist embedded with the power supply network according to the power supply network model and the position of the power port of the circuit module in the power bus network further comprises:
generating a power supply network configuration file according to the power supply network model and the position of the power port of the circuit module in the power bus network, the power supply network configuration file being configured to integrate the power supply network model and the circuit module;
generating the netlist embedded with the power supply network according to the power supply network configuration file.

13. The chip design method of claim 12, wherein the power supply network configuration file comprises at least horizontal and vertical coordinate information of the power port of the circuit module in the power bus network.

14. The chip design method of claim 1, wherein after performing the circuit simulation according to the netlist embedded with the power supply network, the method further comprises:
modifying the power bus network or modifying the circuit module;
generating the modified netlist embedded with the power supply network;
performing circuit simulation according to the modified netlist embedded with the power supply network.

15. A chip design device, comprising:
a power bus network generation module configured to create a power bus network according to a bonding pad position and a chip layout floor plan;
a circuit module position determination module configured to determine a position of a power port of the circuit module in the power bus network;
a power supply network model generation module configured to create a power supply network model according to the power bus network;
a power supply network-embedded netlist generation module configured to generate a netlist embedded with the power supply network according to the power supply network module and the position of the port of the circuit module in the power bus network;
a simulation module configured to perform circuit simulation according to the netlist embedded with the power supply network.

16. The chip design device of claim 15, wherein the power supply network model generation module comprises:
a power bus network layout generation unit configured to create a layout of the power bus network according to the power bus network;
a parasitic parameter extraction unit configured to extract a parasitic parameter of the layout of the power bus network;
a parasitic parameter calculation unit configured to calculate a value of the parasitic parameter;
a power supply network model generation unit configured to create the power supply network model according to the value of the parasitic parameter.

17. The chip design device of claim 15, wherein the power supply network model generation module comprises:
a power supply network unit generation unit configured to generate a power supply network unit according to needs, wherein the power supply network unit comprises a plurality of power lines and a plurality of power bridge lines, both the power supply lines and the power bridge lines comprising at least one of resistance and capacitance;
a power supply network model generation unit configured to create an array formed by a plurality of the power supply network units to form the power supply network model.

18. The chip design device of claim 15, wherein the power supply network-embedded netlist generation module comprises:
a power supply network configuration file generation unit configured to generate a power supply network configuration file according to the power supply network model and the position of the power port of the circuit module in the power bus network, wherein the power supply network configuration file is configured to integrate the power supply network model and the circuit module;
a power supply network-embedded netlist generation unit configured to generate the netlist embedded with the power supply network according to the power supply network configuration file.

19. A computer device, comprising a memory, a processor, and a computer program stored on the memory and executable by the processor, wherein the processor executes the computer program to implement the chip design method according to any one of claims 1-14.

20. A storage medium, containing computer executable instructions, wherein when executed by a computer processor, the computer executable instructions implement the chip design method according to any one of claims 1-14.
